# EUROPÄISCHE PATENTSCHRIFT

(11) **EP 2 997 185 B1**
(45) Veröffentlichungstag und Bekanntmachung des Hinweises auf die Patenterteilung: **03.07.2019**
(21) Anmeldenummer: 14725635.8
(22) Anmeldetag: 13.05.2014
(51) Int. Cl.: D04H 1/4391, B01D 39/16, D04H 3/007, D04H 3/03, D01D 5/20

(54) **FASERVLIES UND VERFAHREN ZUR HERSTELLUNG DESSELBEN**
FIBROUS NONWOVEN AND METHOD FOR THE PRODUCTION THEREOF
NON-TISSÉ DE FIBRES ET SON PROCÉDÉ DE FABRICATION

(30) Priorität: 16.05.2013 DE 102013008402
(43) Veröffentlichungstag der Anmeldung: 23.03.2016
(73) Patentinhaber: Irema-Filter GmbH, 92353 Postbauer-Pavelsbach (DE)
(72) Erfinder: SEEBERGER, Andreas, 90480 Nürnberg (DE)
(74) Vertreter: Wallinger, Michael
(86) Internationale Anmeldenummer: PCT/EP2014/001290
(87) Internationale Veröffentlichungsnummer: WO 2014/183866

(56) Entgegenhaltungen:
- EP-A2- 0 109 619
- WO-A1-97/05306
- WO-A1-2006/002684
- WO-A1-2012/034679
- WO-A2-2007/061475
- DE-A1- 10 026 281
- GB-A- 941 082
- US-A- 3 557 801

## Beschreibung

Die Erfindung betrifft ein Faservlies, insbesondere für ein Filtermedium, mit zumindest einem Faserstrang, der in Längsrichtung zumindest einen ersten Abschnitt und einen zweiten Abschnitt aufweist.

Faservliese dieser Art werden in Filtermedien, z. B. für Raumluftfilter oder Filter für Klimaanlagen, insbesondere aber für Luftfilter für den Kraftfahrzeuginnenraum oder für Motorenfilter eingesetzt.

Die Faservliese werden üblicherweise in einem Urformprozess, insbesondere mit einem Schmelz-Spinnverfahren wie beispielsweise einem Spun-Bond-Verfahren oder einem Meltblown-Verfahren hergestellt, wie dies beispielsweise in der DE 41 23 122 A1 beschrieben ist.

Die Ansaugluft von Verbrennungskraftmaschinen, beispielsweise in Kraftfahrzeugen oder im Off-Highway-Bereich wird üblicherweise gefiltert, um den motorischen Verbrennungsraum vor einer mechanischen Beschädigung durch angesaugte Partikel aus der Umgebungsluft zu schützen. Ein wichtiges Kriterium beim Design der Elemente ist es, eine hohe Standzeit des Filters bei gleichzeitig hoher Abscheideleistung der angesaugten Partikel zu gewährleisten.

Auf der anderen Seite weisen Kraftfahrzeuge jedoch ein genau berechnetes Energieverteilungssystem auf. Im Bereich Heizung/Lüftung/Klima stehen dabei nur begrenzte Energien zur Verfügung, insbesondere bei elektrisch betriebenen Kraftfahrzeugen. Aufgrund der immer strengeren Abgasvorgaben müssen diese Energiemengen immer stärker reduziert werden, insbesondere auch bei Elektrofahrzeugen, bei denen die gespeicherte Energie möglichst nur für den Antrieb angewendet werden soll. Auch die Kosten von Fahrzeugkomponenten dürfen sich nur in einem engen Rahmen bewegen. Andererseits werden vom Fahrzeugkäufer aber immer mehr Ansprüche an Komfort und Sicherheit gestellt. Unter diesen Gesichtspunkten sind Partikelfilter von einem möglichst niedrigen Druckabfall bzw. Differenzdruck von besonderer Bedeutung, da von dem Lüftermotor nur ein niedriger Druck generiert werden muss und der Energieverbrauch somit geringer ausfällt. Des Weiteren arbeitet dieser durch die geringere benötigte Leistung auch leiser, wodurch die Geräuschentwicklung verringert und somit der Fahrtkomfort wesentlich erhöht wird.

Die Forderung nach Filtersystemen mit niedrigem Differenzdruck konkurriert mit der geforderten Abscheideleistung und der geforderten Standzeit, also der Zeit in km-Laufleistung, die ein Filter im Fahrzeug verbleiben kann, bis er ausgetauscht werden muss. Beispielsweise genügen für den Fahrzeuginnenraum Pollenfilter, die nur Pollen aus der einströmenden Luft im Fahrzeug filtern, nicht. Die Allergene auf die das Immunsystem reagiert, sind Proteine, deren Durchmesser nur ein Bruchteil des Pollendurchmessers beträgt. Sie liegen im Größenbereich um 0,1 µm, d.h. in dem Bereich der für Partikelfilter die größten Probleme aufweist, dem sogenannten MPPS (most penetrating particle size)-Bereich. Dementsprechend sollte die Abscheideleistung in diesem Größenbereich mindestens 50 % betragen, wobei diese mittels eines Aerosols gemessen wird, dessen Partikel in etwa die gleiche Größe wie die zu filternden Partikel aufweisen, z. B. Natriumchlorid. Gleichzeitig sollen von derartigen Filtern beim Einbau in Kraftfahrzeugen Standzeiten von mindestens 30.000 km erreicht werden.

Bei gängigen Filtern, beispielsweise in Ringfiltern oder Rahmenfiltern, wird das Filtermedium aus Faservlies zick-zack-förmig gefaltet, das heißt plissiert, um die Oberfläche des Filtermediums pro Flächeneinheit des Filters zu vergrößern. Um das Filtermedium plissierbar zu machen, muss dieses eine gewisse Steifigkeit aufweisen. Auch im plissierten Zustand ist eine gewisse Steifigkeit des Filtermediums erwünscht, um ein Kollabieren der einzelnen Falten der Plissierung aufeinander bei der Anströmung mit zu filternder Luft zu verhindern.

Aus dem Stand der Technik sind verschiedene Methoden bekannt, um die Steifigkeit eines Filtermediums zu erhöhen. Zum Beispiel ist es bekannt, dass ein Filtermedium mit einer Prägung zu versehen, welche durch ihre dreidimensionale Struktur eine Versteifung des Materials herbeiführen.

Weiterhin ist es bekannt, Bikomponentenfasern einzusetzen, welche die Eigenschaften von zwei verschiedenen Polymeren in einem Faservlies vereinen. Ein Faservlies mit hochfesten reißfesten Komponentenfasern wird beispielsweise in der EP 1 866 472 B1 offenbart.

Das Dokument EP 0 109 617 A2 betrifft einen Batterieseparator aus kontinuierlichen Schmelzspinnfasern, die in aufeinanderfolgenden Abschnitten abwechselnd einen Durchmesser von 2 bis 4 µm und einen Durchmesser von 10 bis 30 µm haben, die zu einer Matte vereint und gegebenenfalls verdichtet sind.

Das Dokument WO 2006/002684 A1 betrifft ein Verfahren zur Herstellung einer Spinnvliesfaser aus einer Polymerschmelze. Ein Gasstrom und eine Düseneinrichtung werden so eingestellt, dass sich ein aus einer Polymerschmelze erhaltener Faserstrang ungleichmäßig verstreckt und durch Abkühlung zu einer endlosen Faser mit ungleichförmiger Faserfeinheit geführt wird.

Das Dokument WO 2007/061475 A2 betrifft einen Coalescer mit variablen Eigenschaften einschließlich eines variablen Durchmessers einzelner Fasern entlang ihrer Länge. Eine einzelne Faser weist an verschiedenen Punkten entlang ihrer Länge unterschiedliche Durchmesser und variable Porosität auf.

Bekannte Faservliese mit erhöhter Steifigkeit haben dabei den Nachteil, dass sie einerseits nur mit erhöhtem Aufwand hergestellt werden können und/oder die Steifigkeit erst durch nachgeschaltete Bearbeitungsverfahren des Faservlieses erhöht wird.

Die Erfindung stellt es sich daher zur Aufgabe, ein Faservlies mit erhöhter Steifigkeit bereitzustellen, das einfach und kostengünstig, insbesondere auf schon bestehenden Vorrichtungen, hergestellt werden kann.

Diese Aufgabe wird erfindungsgemäß durch ein Faservlies gemäß Anspruch 1 und ein Verfahren zur Herstellung eines Faservlieses gemäß Anspruch 14 gelöst.

Die erfindungsgemäßen Verdickungen wirken als strukturelle Verstärkungen des Faservlieses. Dies trägt zur Erhöhung der Steifigkeit des Faservlieses bei. Das Faservlies wird hierdurch besser plissierbar und behält auch in der Fläche besser seine Form. Dadurch fallen bzw. kollabieren einzelne Plissees eines Filters bei einer Anströmung mit zu filternder Luft nicht aufeinander, eine große Filteroberfläche bleibt somit erhalten.

Ein Faservlies im Sinne der Erfindung ist ein nicht gewebter Stoff, bei welchem Faserstränge im Urformprozess aufeinander abgelegt werden und sich zu einem Vlies verbinden. Gegebenenfalls erfolgt in einem weiteren Schritt eine Verfestigung durch Kalandrieren, Thermobonding, Heißluft- und/oder Ultraschallschweißen.

Ein Faserstrang im Sinne der Erfindung ist durch eine oder mehrere Fasern gebildet, wobei der oder die Fasern in Längsrichtung keine Unterbrechung aufweisen, mithin einstückig sind.

Eine Verdickung im Sinne der Erfindung ist eine Vergrößerung des Durchmessers und/oder des Umfangs des Faserstrangs.

Eine Kräuselung im Sinne der Erfindung ist eine Verdrehung des Faserstrangs mit sich selbst und wird vorzugsweise durch die sogenannte Einkräuselung beschrieben. Zu ihrer Bestimmung benötigt man die Länge der Faser im gekräuselten und gestreckten Zustand und Bestimmung der dazu benötigten Zugspannung. Eine solche Bestimmung kann insbesondere nach DIN 53840 erfolgen.

Ein Faserbündel im Sinne der Erfindung besteht aus mehreren Fasersträngen.

Ein Polymer im Sinne der Erfindung ist ein reines Polymer oder eine Polymermischung, welche als Bestandteile zumindest Konzentrationen zweier Polymere aufweist. Vorzugsweise können auch weitere Stoffe oder Verunreinigungen Bestandteile der Polymermischung sein. Insbesondere weist dieses/diese eine charakteristische Verteilung der Molekülkettenlänge und/oder eine charakteristische Molekülstruktur auf.

Luftdurchlässigkeit im Sinne der Erfindung ist jenes Volumen pro Quadratmeter, welches ein Faservlies bei vorzugsweise 200 Pa Anströmdruck pro Sekunde durchströmt.

Eine Abscheideleistung im Sinne der Erfindung wird mit NaCI-Partikeln, insbesondere mit einer Größe von 0,3 µm bis 0,5 µm und vorzugsweise nach DIN 71460-1, bei einer Anströmgeschwindigkeit von vorzugsweise 0,14 m/s bestimmt.

Eine Massenbelegung im Sinne der Erfindung ist die flächenbezogene Masse und wird vorzugsweise nach DIN EN 29073-1 bestimmt.

Eine durchschnittliche Porengröße im Sinne des Patents wird vorzugsweise in Anlehnung an den Bubble-Point Test nach den Normen ASTM D6767, ASTM F316-0 und/oder ISO 2942, ISO 4003, insbesondere mit dem Messgerät Topas PSM 165 bestimmt.

Eine Viskosität im Sinne der Erfindung ist ein Maß für die Zähflüssigkeit eines Fluids. Je größer die Viskosität, desto dickflüssiger (weniger fließfähig) ist das Fluid; je niedriger die Viskosität, desto dünnflüssiger (fließfähiger) ist es, kann also bei gleichen Bedingungen schneller fließen. Ein Maß für die Viskosität einer Kunststoffschmelze ist der Schmelzflussindex, welcher als Schmelze-Volumenfließrate und/oder Schmelze-Massefließrate angegeben wird. Vorzugsweise wird die Viskosität erfindungsgemäß nach dem allgemeinen Prüfverfahren der Norm DIN EN ISO 1133-1:2011 bestimmt. Die Bedingungen für die Bestimmung der Schmelze-Fließrate von thermoplastischen Materialien werden erfindungsgemäß vorzugsweise nach den folgenden internationalen Normen festgelegt:

| **Materialien** | **Internationale Norm** |
|---|---|
| ABS | ISO 2580 |
| ASA, ACS, AEDPS | ISO 6402 |
| ENAC | ISO 4613 |
| MABS | ISO 10366 |
| PB^{a} | ISO 8986 |
| | ISO 15494 |
| | ISO 15876 |
| PC | ISO 7391 |
| PE^{a} | ISO 1872 |
| | ISO 4427 |
| | ISO 4437 |
| | ISO 15494 |
| | ISO 22391 |
| PMMA | ISO 8257 |
| POM | ISO 9988 |
| PP^{a} | ISO 1873 |
| | ISO 15494 |
| | ISO 15874 |
| PS | ISO 1622 |
| PS-I | ISO 2897 |
| SAN | ISO 4894 |
| ^{a}Schmelzdichtewerte für dieses Material können in der Werkstoffnorm enthalten sein. | |

Bevorzugte Ausgestaltungen werden in den Unteransprüchen beansprucht.

Vorzugsweise beträgt die Viskosität des ersten Polymers bzw. der ersten Polymermischung bei 230°C und einem Druck von 2,16kg etwa 200 - 1200 ccm/10min, bevorzugt etwa 300 - 800 ccm/10min, am bevorzugtesten etwa 400 - 700 ccm/10min.

Vorzugsweise beträgt die Viskosität des zweiten Polymers bei 250°C und einem Druck von 2,16kg etwa 5 - 80 ccm/10min, bevorzugt 10-50 ccm/10min, bevorzugter 12-30 ccm/10min, noch bevorzugter 14 - 20 ccm/10min und am bevorzugtesten 17 ccm/10min.

In einer bevorzugten Ausgestaltung weist eine Verdickung an ihrer breitesten Stelle einen Durchmesser auf, welcher zu dem mittleren Durchmesser des Faserstrangs in dem zumindest einen ersten Faserabschnitt ein Verhältnis von zumindest 3:1, bevorzugt von zumindest 2:1, bevorzugter von zumindest 1,7:1, und am bevorzugtesten von zumindest 1,5:1 aufweist.

In einer weiteren bevorzugten Ausgestaltung weist der Faserstrang im ersten Faserabschnitt einen mittleren Durchmesser von etwa 0,5 bis 20 µm, bevorzugt von etwa 1 bis 9 µm, bevorzugter von etwa 3 bis 6 µm und am bevorzugtesten von etwa 5 µm auf.

In einer weiteren bevorzugten Ausgestaltung weist die Verdickung an ihrer breitesten Stelle einen Durchmesser auf, welcher zu der Ausdehnung der Verdickung in Längsrichtung des zumindest einen einstückigen Faserstrangs ein Verhältnis von etwa 0,5:1 bis 1:1, bevorzugter von etwa 1:1 bis 2:1 und am bevorzugtesten von etwa 2:1 bis 4:1 aufweist.

In einer weiteren bevorzugten Ausgestaltung weist die Verdickung eine Kräuselung des Faserstrangs auf. Hierbei bildet insbesondere die Kräuselung die Verdickung. Durch die Kräuselung wird der betroffene Faserstrang in dem zweiten Abschnitt verstärkt. Dies geschieht insbesondere durch Interaktion einzelner Verwirbelungen des Faserstrangs miteinander.

In einer weiteren bevorzugten Ausgestaltung weist die Verdickung zumindest eine Kräuselung und/oder zumindest ein Faserbündel auf. Die Kräuselung und/oder Faserbündel führen dazu, dass einzelne Faserstränge nicht nur in sich verstärkt werden, sondern sich angrenzende Faserstränge gegenseitig stützen.

In einer bevorzugten Ausführungsform weist die Verdickung verschlungene Schlaufen des Faserstrangs auf. Auch die Interaktion von einzelnen Schlaufen eines Faserstrangs führt zu einer Verstärkung des Faservlieses. Alternativ können auch die Schlaufen mehrerer Faserstränge miteinander verschlungen sein.

In einer weiteren bevorzugten Ausführungsform weist die Verdickung einen Bereich auf, in welchem der Faserstrang an sich selbst anliegt und bevorzugt in diesem Bereich zumindest teilweise verschmolzen ist. Auch das Verschmelzen aneinander liegender Bereiche erhöht die Steifigkeit des Faservlieses.

Erfindungsgemäß weist der erste Faserabschnitt im Wesentlichen ein erstes Polymer oder eine erste Polymermischung auf und der zweite Faserabschnitt weist im Wesentlichen ein zweites Polymer oder eine zweite Polymermischung auf, wobei das zweite Polymer eine höhere Viskosität wie das erste Polymer aufweist.

Durch die Wahl verschiedener Polymere für die Abschnitte des Faserstrangs können unterschiedliche Materialeigenschaften in den einzelnen Abschnitten erreicht werden. Eine Erhöhung der Steifigkeit durch die Verdickungen kann durch geeignete Materialwahl verstärkt werden. Weiterhin kann durch geeignete Materialwahl im zweiten Abschnitt gegebenenfalls überhaupt erst die Bildung von Verdickungen hervorgerufen werden.

In einer weiteren bevorzugten Ausgestaltung beträgt der Anteil des zweiten Polymers in dem Faservlies 2 Gew.-% bis 20 Gew.-%, bevorzugt 5 Gew.-% bis 15 Gew.-% und am bevorzugtesten 10 Gew.-%. Diese Anteile haben sich als besonders vorteilhaft zum Versteifen des Faservlieses herausgestellt. Vorzugsweise ist das zweite Polymer bzw. die zweite Polymermischung mit dem ersten Polymer bzw. der ersten Polymermischung nicht homogen durchmischt.

In einer weiteren bevorzugten Ausgestaltung schließt sich der zweite Faserabschnitt an den ersten Faserabschnitt an und der einstückige Faserstrang weist einen dritten Faserabschnitt auf, der sich dem zweiten Faserabschnitt anschließt und dessen Struktur im Wesentlichen identisch zum ersten Faserabschnitt ist.

Durch die erneute Veränderung der Polymerzusammensetzung im dritten Faserabschnitt wird erreicht, dass die Makrostruktur dieses Faserabschnitts im Wesentlichen identisch zu jener des ersten Faserabschnitts ist und daher im Wesentlichen keine Knäuelbildung bzw. Bildung von Verdickungen aufweist.

In einer weiteren bevorzugten Ausgestaltung weist die erste Lage eine Massenbelegung von etwa 25 g/m² bis 45 g/m², bevorzugt von etwa 30 g/m² bis 40 g/m² und am bevorzugtesten von etwa 35 g/m² und/oder eine Dicke von etwa 0,4 mm bis etwa 0,7 mm, bevorzugt etwa 0,5 mm bis etwa 0,6 mm und am bevorzugtesten von etwa 0,55 mm auf.

Mit diesen Parameterwerten wurde festgestellt, dass eine besonders gute Staubspeicherkapazität bzw. eine besonders gute Abscheideleistung der ersten Lage erreicht wird.

In einer weiteren bevorzugten Ausgestaltung weist die erste Lage im Durchschnitt etwa 2 bis 10, bevorzugt etwa 4 bis 8 Verdickungen/cm², besonders bevorzugt etwa 5 bis 7 Verdickungen/cm² und am bevorzugtesten etwa 6 Verdickungen/cm² auf.

Mit diesen Konzentrationen an Verdickungen wurde festgestellt, dass eine gute Stabilisierung der ersten Lage bzw. eines Filtermediums bei nur geringfügig verringerter Abscheideleistung erreicht wird.

In einer weiteren bevorzugten Ausgestaltung weist die erste Lage eine Luftdurchlässigkeit von etwa 5000 l/(m²s) bis 7000 l/(m²s), bevorzugt etwa 5500 l/(m²s) bis 6500 l/(m²s)und am bevorzugtesten von etwa 6000 l/(m²s) und/oder eine Abscheideleistung von etwa 10 % bis 20 % und bevorzugt von etwa 15 % auf.

Diese Parameterwerte sind für den Einsatz des Filtermediums als Luftfilter, insbesondere in einem Fahrzeug, besonders gut geeignet.

In einer weiteren bevorzugten Ausgestaltung weist das Filtermedium zusätzlich eine zweite Lage auf, deren Porengröße im Durchschnitt im Wesentlichen kleiner als jene der ersten Lage ist.

Durch diese zweite Lage wird eine weitere Stabilisierung des Filtermediums erreicht. Ferner können grobe Staubpartikel in dieser zweiten Lage vorgefiltert werden.

In einer weiteren bevorzugten Ausgestaltung weist die zweite Lage eine Massenbelegung von etwa 45 bis 75 g/m², bevorzugt von etwa 50 bis 70 g/m², besonders bevorzugt von etwa 55 bis 65 g/m² und am bevorzugtesten von etwa 60 g/m² und/oder eine Dicke von etwa 0,5 mm bis 0,9 mm, bevorzugt von etwa 0,6 mm bis 0,8 mm und am bevorzugtesten von etwa 0,7 mm auf.

Mit diesen Parameterwerten wurde festgestellt, dass eine besonders gute Staubspeicherkapazität bzw. eine besonders gute Abscheideleistung der zweiten Lage erreicht wird.

In einer weiteren bevorzugten Ausgestaltung weist die zweite Lage eine Luftdurchlässigkeit von etwa 3000 l/(m²s) bis 4000 l/(m²s), bevorzugt etwa 3250 l/(m²s) bis 3750 l/(m²s) und am bevorzugtesten von etwa 3500 l/(m²s) und/oder eine Abscheideleistung von etwa 10% bis 25%, bevorzugt von etwa 15% bis 20% und am bevorzugtesten von etwa 17,5% auf.

Diese Parameterwerte sind für den Einsatz des Filtermediums als Luftfilter, insbesondere in einem Fahrzeug, besonders gut geeignet.

In einer weiteren bevorzugten Ausgestaltung weist das Filtermedium zusätzlich eine dritte Lage auf, deren Porengröße im Durchschnitt im Wesentlichen kleiner als jene der zweiten Lage ist und welche bevorzugt an der der zweiten Lage abgewandten Seite der ersten Lage angeordnet ist.

Diese Lage kann besonders gut als Elektretfilterschicht in dem Filtermedium eingesetzt werden, da dieses Material eine hohe statische Ladungskapazität aufweist.

In einer weiteren bevorzugten Ausgestaltung weist die dritte Lage eine Massenbelegung von etwa 35 bis 60 g/m², bevorzugt von etwa 40 bis 55 g/m², besonders bevorzugt etwa von 45 bis 50 g/m² und am bevorzugtesten etwa von 47,5 g/m² und/oder eine Dicke etwa von 0,4 mm bis 0,7 mm, bevorzugt etwa von 0,5 mm bis 0,6 mm und am bevorzugtesten von etwa 0,55 mm auf.

Mit diesen Parameterwerten wurde festgestellt, dass eine besonders gute Staubspeicherkapazität bzw. eine besonders gute Abscheideleistung der dritten Lage erreicht wird.

In einer weiteren bevorzugten Ausgestaltung weist die dritte Lage eine Luftdurchlässigkeit etwa von 800 l/(m²s) bis 1300 l/(m²s), bevorzugt etwa von 900 l/(m²s) bis 1200 l/(m²s) und am bevorzugtesten etwa von 1000 l/(m²s) und/oder eine Abscheideleistung etwa von 40% bis 80%, bevorzugt etwa von 50% bis 70% und am bevorzugtesten etwa von 60% auf.

Diese Parameterwerte sind für den Einsatz des Filtermediums als Luftfilter, insbesondere in einem Fahrzeug, besonders gut geeignet.

In einer weiteren bevorzugten Ausgestaltung weisen die drei Lagen zusammen eine Massenbelegung etwa von 105 g/m² bis 180 g/m², bevorzugt etwa von 120 g/m² bis 160 g/m² und am bevorzugtesten von etwa 140 g/m² und/oder eine Dicke etwa von 1,2 mm bis 2,5 mm, bevorzugt etwa von 1,3 mm bis 2,3 mm, besonders bevorzugt etwa von 1,5 mm bis 2,1 mm, bevorzugter etwa von 1,7 mm bis 1,9 mm und am bevorzugtesten von etwa 1,8 mm auf.

Mit diesen Parameterwerten wurde festgestellt, dass eine besonders gute Staubspeicherkapazität bzw. eine besonders gute Abscheideleistung des dreilagigen Filtermediums erreicht wird.

In einer weiteren bevorzugten Ausführungsform weisen die drei Lagen zusammen eine Luftdurchlässigkeit etwa von 500 l/(m²s) bis 1300 l/(m²s), bevorzugt etwa von 600 l/(m²s) bis 1200 l/(m²s), besonders bevorzugt etwa von 800 l/(m²s) bis 1000 l/(m²s) und am bevorzugtesten von etwa 900 l/(m²s) auf.

Auch diese Parameterwerte sind für den Einsatz des Filtermediums als Luftfilter, insbesondere in einem Fahrzeug, besonders gut geeignet.

Das erfindungsgemäße Verfahren hat zum Vorteil, dass Abschnitte eines Faserstrangs, sogenannte Faserabschnitte, mit verschiedener Struktur im Urformprozess erzeugt werden können, ohne dass eine weitere Nachbehandlung der Faserstränge bzw. des Faservlieses benötigt werden. Auch können verschiedene Lagen eines Faservlieses mit variierenden Strukturen in einem einzigen Urformprozess gleichzeitig hergestellt werden. Dies ist nicht möglich, wenn Strukturveränderungen in einer Lage erst in einem nachgeschalteten Bearbeitungsprozess erzeugt werden können, da dann jede weitere Lage erst in einem weiteren Urformprozess aufgebracht werden kann.

Weiterhin wird ermöglicht, dass die Faserstränge mit mehreren Strukturen durch die Veränderung der Parameter einstückig ausgebildet sein können. Würde vorgesehen werden, einen ähnlichen durch teilweises bzw. vorübergehendes Einbringen von Fasersträngen anderer Struktur zu erreichen, so würden diese an ihrem Anfang und an ihrem Ende jeweils Tropfen, sogenannte Shots, ausbilden, welche zu einer Verminderung der Qualität des Faservlieses, insbesondere der Staubspeicherkapazität, führen würden.

In einer bevorzugten Ausgestaltung werden mindestens zwei Polymere zum Erzeugen der ersten Polymerschmelze in der Weise vermischt, dass die Polymere in der ersten Polymerschmelze vorzugsweise inhomogen verteilt sind.

Durch das Bereitstellen von Bereichen in der Polymerschmelze, in welchen verschiedene Polymere dominieren, werden beim Ausbringen der Polymerschmelze aus einem Spinnbalken im Urformprozess Faserstränge mit Faserabschnitten unterschiedlicher Materialstrukturen erzeugt. Vorzugsweise werden hierzu Granulatcluster eines zweiten Polymers bzw. Polymermischung homogen in das Granulat eines ersten Polymers bzw. Polymermischung untermischt. Wird diese Zusammensetzung geschmolzen, so bilden sich in der Schmelze Inseln des zweiten Polymers/Polymermischung aus, welche das erste Polymer/Polymermischung inhomogen machen.

In einer weiteren bevorzugten Ausführungsform ist zumindest eines der Polymere, insbesondere das erste Polymer, beim Vermischen in geschmolzenem Zustand.

Durch ein Einmischen des zweiten Polymers in das geschmolzene erste Polymer oder andersherum können einzelne Bereiche in dem geschmolzenen ersten "Hauptpolymer" erzeugt werden, in welchem das jeweils untergerührte bzw. eingemischte zweite Polymer vorwiegend vorhanden ist. Es lässt sich also eine inhomogene Durchmischung mit Bereichen von Polymeren erreichen, in welchen aber jeweils die Bereiche homogen angeordnet sind.

Erfindungsgemäß können auch mehrere der oben beschriebenen Ausgestaltungen der Erfindung - soweit technisch sinnvoll - beliebig miteinander kombiniert werden.

Obige sowie weitere Vorteile, Merkmale und Anwendungsmöglichkeiten der vorliegenden Erfindung ergeben sich aus den nachfolgenden Beschreibungen der bevorzugten Ausführungsbeispiele anhand der Zeichnungen. In diesen wird wie folgt dargestellt:
Fig. 1 ist eine teilweise schematische Darstellung zweier Faserstränge mit einer Verdickung eines Faservlieses gemäß der vorliegenden Erfindung;
Fig. 2a ist eine Elektronenmikroskopaufnahme eines Faservlieses gemäß der vorliegenden Erfindung;
Fig. 2b ist eine teilweise schematische Darstellung der Elektronenmikroskopaufnahme gemäß Fig. 2a;
Fig. 3a ist eine weitere Elektronenmikroskopaufnahme eines Faservlieses gemäß der vorliegenden Erfindung;
Fig. 3b ist eine teilweise schematische Darstellung der Elektronenmikroskopaufnahme gemäß Fig. 3a;
Fig. 4a ist eine weitere Elektronenmikroskopaufnahme eines Faservlieses gemäß der vorliegenden Erfindung;
Fig. 4b ist eine teilweise schematische Darstellung der Elektronenmikroskopaufnahme gemäß Fig. 4a;
Fig. 5a ist eine weitere Elektronenmikroskopaufnahme eines Faservlieses gemäß der vorliegenden Erfindung;
Fig. 5b ist eine teilweise schematische Darstellung der Elektronenmikroskopaufnahme gemäß Fig. 5a;
Fig. 6 ist eine teilweise schematische Darstellung eines Faservlieses mit mehreren Verdickungen gemäß der vorliegenden Erfindung;
Fig. 7 ist eine teilweise schematische Darstellung eines Herstellungsprozesses
Fig. 8 ist eine teilweise schematische Darstellung eines Herstellungsprozesses gemäß einer zweiten Ausführungsform der vorliegenden Erfindung;
Fig. 9 ist eine teilweise schematische Darstellung einer Polymerschmelze für den Herstellungsprozess gemäß der zweiten Ausführungsform der Erfindung nach Fig. 8;
Fig. 10 ist eine teilweise schematische Darstellung eines erfindungsgemäßen Faservlieses mit drei Lagen;
Fig. 11 ist eine teilweise schematische Darstellung eines Herstellungsprozesses eines erfindungsgemäßen Faservlieses mit drei Lagen;

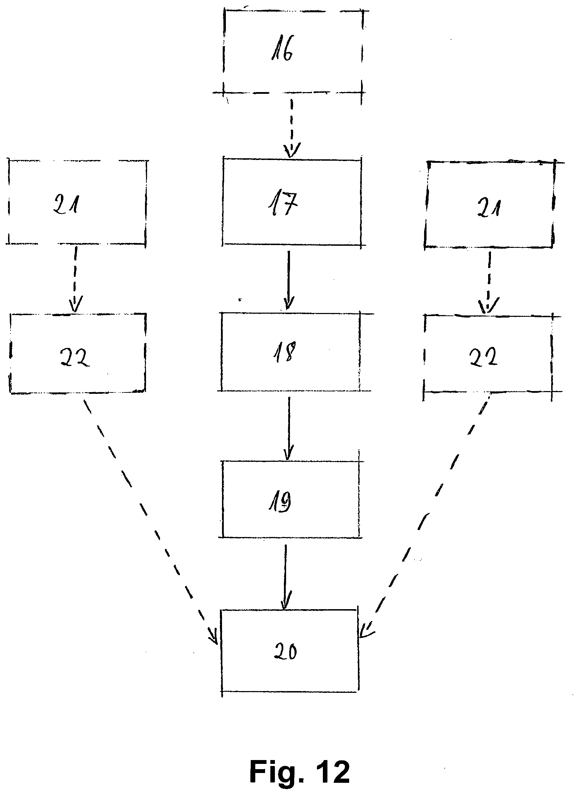

Fig. 12 ist ein Blockdiagramm, welches einen Herstellungsprozess eines erfindungsgemäßen Faservlieses mit drei Lagen teilweise schematisch darstellt.

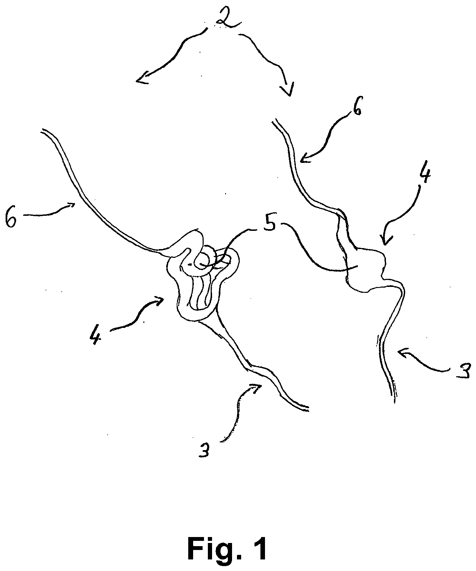

Fig. 1 zeigt zwei Faserstränge 2 eines erfindungsgemäßen Faservlieses 1, das jeweils eine Verdickung 5 aufweist. Die Faserstränge 2 lassen sich in jeweils drei Faserabschnitte 3, 4 und 6 aufteilen. Ein erster Faserabschnitt 3 erstreckt sich von dem einen Ende des Faserstrangs bis hin in den Bereich der Verdickung 5. Ein zweiter Faserabschnitt 4 weist die Verdickung 5 sowie vorzugsweise die Bereiche kurz vor und kurz hinter der Verdickung 5 auf. Vorzugsweise kann der zweite Faserabschnitt 4 auch lediglich durch eine Verdickung 5 gebildet werden. An den zweiten Faserabschnitt 4 schließt sich der dritte Faserabschnitt 6 an, welcher eine ähnliche oder sogar identische Materialstruktur wie der erste Faserabschnitt 3 enthält. Auch an den dritten Faserabschnitt 6 kann sich wiederum ein zweiter Faserabschnitt 4 mit einer weiteren Verdickung 5 anschließen, wobei die Länge des Faserstrangs 2 theoretisch nicht begrenzt ist.

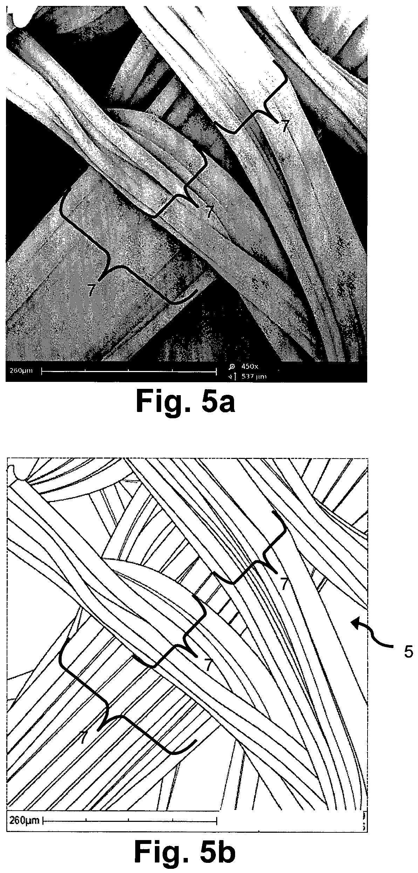

Wie in der Fig. 1 angedeutet ist, kann die Verdickung 5 verschlungene Schlaufen des Faserstrangs 2 aufweisen oder auch nur eine Verdickung des Faserstrangs 2 darstellen. Vorzugsweise wird die Verdickung 5 durch eine Kräuselung des Faserstrangs 2 gebildet, weiter vorzugweise liegen Abschnitte eines Faserstrangs im Bereich in der Verdickung aneinander an, wobei diese Bereiche zumindest teilweise miteinander verschmolzen sind. Weiter vorzugsweise weisen die Verdickungen 5 Faserbündel 7 aus mehreren Fasersträngen 2 auf, welche aneinander liegen. Ein solches Faserbündel 7 kann vorzugsweise jedoch auch aus nur einem Faserstrang 2 bestehen, wobei der Faserstrang 2 im Wesentlichen parallele Schlaufen ausbildet. Weiter vorzugsweise bestehen der erste Faserabschnitt 3 und der zweite Faserabschnitt 4 aus verschiedenen Polymeren. Erfindungsgemäss weist das zweite Polymer eine höhere Viskosität als das erste Polymer auf. Verschiedene Polymere sind hierbei weiter vorzugsweise auch zwei Polymere der gleichen Strukturformel aber unterschiedlicher charakteristischer Verteilung der Molekülkettenlänge. Dies fördert die Bildung einer Verdickung im zweiten Abschnitt, wie im Detail in Bezug auf die Fig. 5 beschrieben wird.

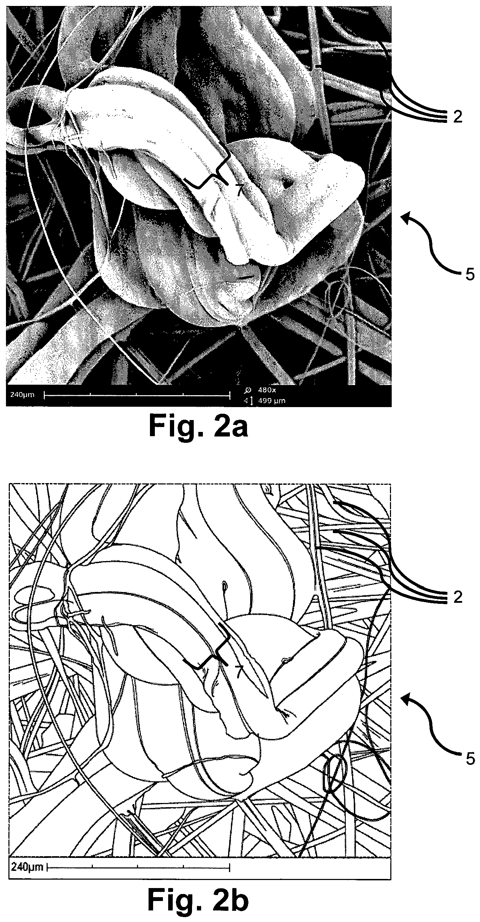

Fig. 2a und 2b zeigen eine Elektronenmikroskopaufnahme einer Verdickung 5, welche in einem Faservlies 1 angeordnet ist. Deutlich erkennbar ist, dass der Faserstrang 2 im Bereich der Verdickung 5 verbunden ist und zum Teil Faserbündel 7 bildet und zum Teil in Schlaufen verschlungen ist. Angrenzende Bereiche des Faserstrangs 2 im Bereich der Verdickung 5 sind teilweise miteinander verschmolzen.

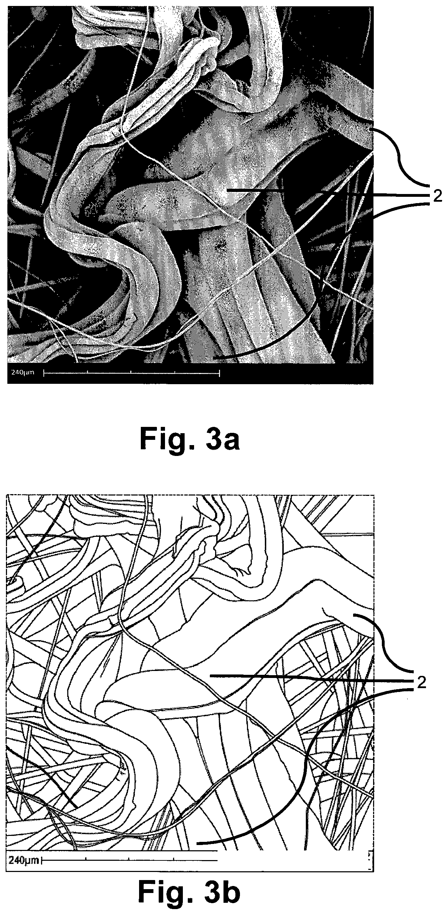

Fig. 3a und 3b zeigen eine weitere Elektronenmikroskopaufnahme einer Verdickung 5, welche in einem Faservlies 1 angeordnet ist. Deutlich erkennbar ist die erhöhte Faserdicke bzw. Faserdurchmesser des mit "2" gekennzeichneten Faserstrangs 2 im Vergleich zum unteren und rechten Bildrand, wo dieser Faserstrang 2 weiterverläuft.

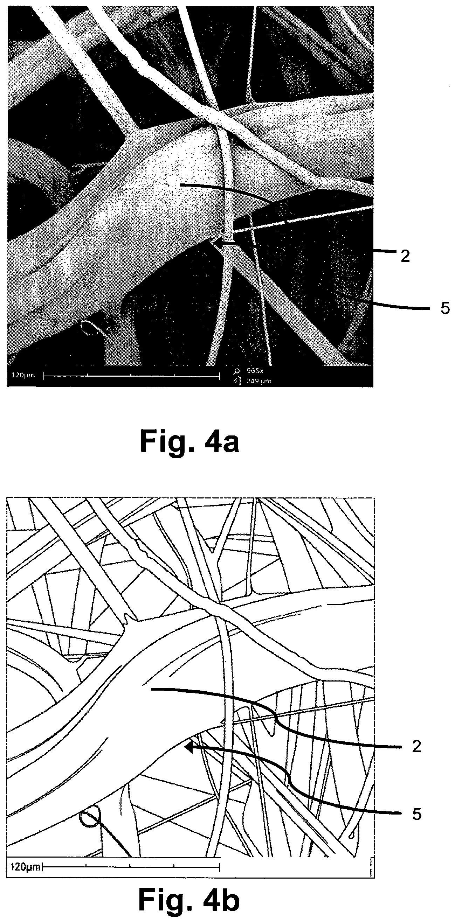

Fig. 4a und 4b zeigen eine weitere Elektronenmikroskopaufnahme einer Verdickung 5, welche in einem Faservlies 1 angeordnet ist. Deutlich erkennbar ist, dass die einzelnen Fasern des Faserstrangs 2 mit der Verdickung 5 in dem Bereich derselbigen miteinander verschmolzen sind.

Fig. 5a und 5b zeigen eine weitere Elektronenmikroskopaufnahme einer Verdickung 5, welche in einem Faservlies 1 angeordnet ist und welche insbesondere durch Faserbündel 7 gebildet wird.

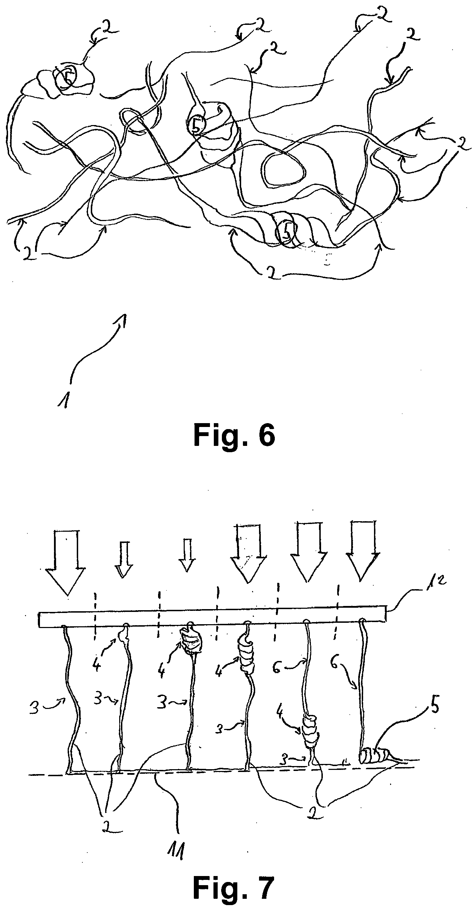

Fig. 6 stellt ein Faservlies 1 gemäß der vorliegenden Erfindung schematisch dar. Das Faservlies 1 besteht aus einer Vielzahl von Fasersträngen 2. Zum Teil weisen die Faserstränge 2 Verdickungen auf, die durch Faserbündel 7, durch eine erhöhte Faserdicke, durch Kräuselung und/oder durch Schlaufen gebildet werden. Vorzugsweise weisen die Verdickungen eine Kombination von Verdickungen, Faserbündeln, Kräuselungen und/oder Schlaufen auf.

Im Regelfall schließen die Faserstränge 2 nicht mit Verdickungen 5 ab, sondern der Faserstrang 2 ist beidseitig des zweiten Faserabschnitts 4 mit der Verdickung 5 in einem ersten Faserabschnitt 3 und einem dritten Faserabschnitt 6 fortgeführt. Dies unterscheidet die Verdickungen insbesondere von sogenannten Shots, welche in einem Faservlies beim Abreißen des Faserstrangs 2 während des Herstellungsprozesses entstehen. Da die Verdickungen 5 Teil der Faserstränge 2 sind, bleibt trotz der Akkumulation des den Faserstrang bildenden Polymers an der Stelle einer Verdickung 5 eine gute Abscheideleistung des Faservlieses 1 erhalten. Dies ist darauf zurückzuführen, dass auch die Verdickungen 5 zu filternde Partikel an ihrer Oberfläche aufnehmen können.

Mit einem erfindungsgemäßen Faservlies 1 werden bessere Abscheideleistungen als mit einem durch eine zweite Faser verstärktem Material oder einer Bikomponentenfaser erreicht, die ähnliche Steifigkeitswerte wie das erfindungsgemäße Faservlies 1 aufweisen.

Fig. 7 zeigt schematisch ein Herstellungsverfahren für ein Faservlies 1 im Meltblown- oder Spun-Bond-Prozess. Der Spinnbalken 12 ist hierbei jeweils an einer Düse zum Ausbringen eines Polymers zu verschiedenen Zeitpunkten dargestellt, die zeitlich von links nach rechts hintereinander ablaufen.

Aus dem Spinnbalken 12 wird zunächst ein Polymer unter Druck ausgebracht. Dieses ausgebrachte Polymer wird mit Hilfe eines Prozessluftstroms, welcher von oben den Spinnbalken 12 umströmt und in der Fig. 7 mit einem Pfeil angedeutet ist, verstreckt und zu dem Substrat 11 transportiert, auf welchem der entstandene Faserstrang 2 abgelegt wird. In einem nächsten Schritt wird die Intensität des Luftstroms der Prozessluft reduziert. An der Düse des Spinnbalkens 12 verdickt sich der Faserstrang 2, da das Polymer nur langsamer abtransportiert bzw. verstreckt wird (geringerer Prozessluftstrom angedeutet durch den kleinen Pfeil). Somit entstehen an dem Faserstrang 2 ein erster Abschnitt 3 mit im Wesentlichen homogener Struktur und ein zweiter Abschnitt 4, welcher nach und nach eine Verdickung 5 ausbildet. Zu einem gegebenen Zeitpunkt wird die Intensität des Luftstroms wiederum erhöht, wodurch sich der Abtransport durch den Spinnbalken 12 ausgesprühten Polymers bzw. dessen Verstreckung wieder erhöht. Hierdurch entsteht in dem Faserstrang 2 ein dritter Abschnitt 6, dessen Materialstruktur dem ersten Abschnitt 3 ähnelt oder sogar identisch ist.

Schließlich wird, wie ganz rechts in der Figur 7 dargestellt, die Verdickung 5 auf dem Substrat 11 abgelegt. Während des gesamten Prozesses ist das Substrat 11 vorzugsweise in Bewegung, so dass der Faserstrang 2 hintereinander auf dem Substrat 11 abgelegt wird. Vorzugsweise reißt der Faserstrang 2 während des gesamten Prozesses zur Bildung einer Verdickung 5 nicht an dem Spinnbalken 12 bzw. der jeweiligen Sprühdüse ab, so dass ein kontinuierlicher Faserstrang 2 entsteht.

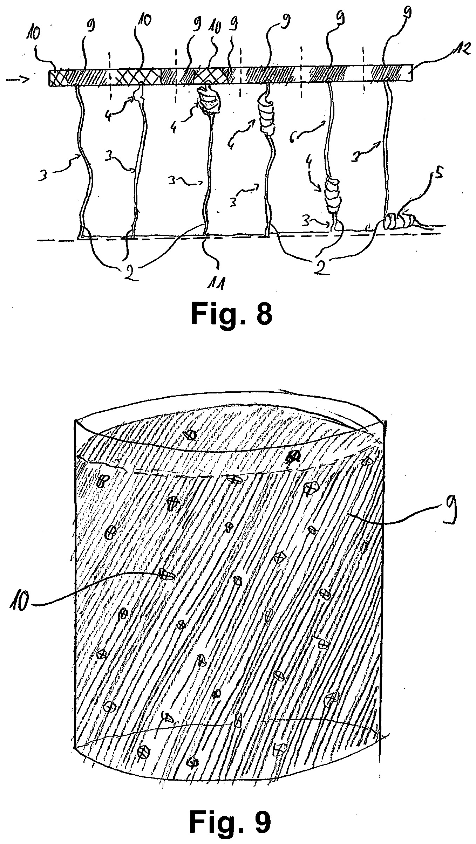

Fig. 8 stellt den Herstellungsprozess eines erfindungsgemäßen Faservlieses 1 dar. Wiederum ist die zeitliche Abfolge der Vorgänge an einer Düse eines Spinnbalkens 12 von links nach rechts dargestellt. Im Wesentlichen unterscheidet sich das Herstellungsverfahren gemäß Fig. 8 von dem Herstellungsverfahren gemäß Fig. 7 dadurch, dass der Prozessluftstrom konstant bleibt, die Viskosität des Polymers jedoch verändert wird. Vorzugsweise werden in den Spinnbalken 12 hintereinander verschiedene Polymere oder Polymermischungen eingebracht, die Bereiche eines ersten Polymers 9 und Bereiche eines zweiten Polymers 10 in dem Spinnbalken bilden. Das erste Polymer 9 bildet hierbei beim Aussprühen aus dem Spinnbalken 12 einen ersten Faserabschnitt 3 oder einen dritten Faserabschnitt 6 eines Faserstrangs 2. Das zweite Polymer 10 bildet beim Aussprühen aus der Düse einen zweiten Faserabschnitt 4 eines Faserstrangs 2 aus, in welchen sich beim Ablegen auf dem Substrat Verdickungen 5 in einer ersten Lage 12 des Faservlieses 1 ausbilden.

Die Verdickungen 5 entstehen hierbei dadurch, dass das zweite Polymer 10 eine höhere Viskosität als das erste Polymer 9 aufweist, weswegen dieses durch den Prozessluftstrom nicht so einfach verstreckt werden kann. Folglich verbleibt dieses länger im Bereich einer Spinndüse des Spinnbalkens 12 und akkumuliert dort zu einer Struktur gemäß einem dritten Abschnitt 4, welcher schließlich eine Verdickung 5 ausbildet.

Zusätzlich zu verschiedenen Polymeren 9, 10 kann vorzugsweise auch die Prozesstemperatur und/oder die Prozessluftgeschwindigkeit am Spinnbalken 12 bzw. an den Sprühdüsen des Spinnbalkens 12 verändert werden, so dass die Viskosität eines einzigen Polymers beeinflusst wird, um jeweils erste Abschnitte 3, zweite Abschnitte 4 und dritte Abschnitte 6 auszubilden.

Fig. 9 zeigt einen Behälter mit einer Polymerschmelze, welche zur Herstellung eines erfindungsgemäßen Faservlieses 2 gemäß der Ausführungsform der Figur 5 verwendet wird. In der Schmelze aus einem ersten Polymer bzw. Polymermischung 9 sind hierbei Bereiche mit dem zweiten Polymer bzw. Polymermischung 10 eingebracht. Dies lässt sich dadurch erreichen, indem einzelne Granulatkörner des zweiten Polymers/Polymermischung 10 in das Polymergranulat des ersten Polymers/Polymermischung 9 eingebracht werden, also eine Durchmischung der Polymere im festen Zustand erfolgt. Weiterhin vorzugsweise lässt sich eine solche Durchmischung erreichen, indem Polymergranulat des zweiten Polymers 10 eine Schmelze des ersten Polymers 9 eingebracht wird. Weiter vorzugsweise können verschiedene Polymere 9, 10 auch durch verschiedene Zuführungen in die jeweilige Düse 9 eines Spinnbalkens 12 eingebracht werden.

Der Anteil des Polymers mit höherer Viskosität in der Schmelze beträgt typischerweise 2 Gew.-% (Gewichtsprozent) bis 20 Gew.-%, bevorzugt 5 Gew.-% bis 15 Gew.-% und am bevorzugtesten 10 Gew.-%.

Als Polymere zur Herstellung eines erfindergemäßen Faservlieses 1 kommen für das erste Polymer 9 vorzugsweise synthetische Polymere, insbesondere Polyester, ausgewählt aus der Gruppe bestehend aus Polyethylen (PE), Polyethylenterephthalat (PET), Polycarbonat (PC), Polyamid (PA), Polypropylen (PP), Polyvinylchlorid (PVC), Polybutylenterephthalat (PBT) und Mischungen davon in Frage. Für das zweite Polymer 10 kommen vorzugsweise synthetische Polymere ausgewählt aus der Gruppe bestehend Polyethylen (PE), Polyethylenterephthalat (PET), Polycarbonat (PC), Polyamid (PA), Polypropylenterephthalat (PBT), Polypropylen (PP), Polyester, Polyvinylchlorid (PVC), Polybutylenterephthalat (PBT) und Mischungen davon in Frage. Das erste Polymer 9 und das zweite Polymer 10 können in beliebigen Kombinationen verwendet werden. Weiterhin können vorzugsweise Mischungen verschiedener dieser oder anderer Polymere sowohl für das erste Polymer 9 als auch für das zweite Polymer 10 verwendet werden.

Geeignet sind vorzugsweise die folgenden Kombinationen aus erstem Polymer 9 und zweitem Polymer 10: PET und PC, PET und PA, PET und PP, PET und PE, PET und PVC, PET und PBT, PC und PA, PC und PP, PC und PE, PC und PVC, PC und PBT, PA und PP, PA und PE, PA und PVC, PA und PBT, PP und PE, PP und PVC, PP und PBT, PE und PVC, PE und PBT oder PVC und PBT.

Weiterhin sind vorzugsweise folgende Kombinationen geeignet: PBT und PVC, PBT und PE, PBT und PP, PBT und PA, PBT und PC, PBT und PET, PVC und PE, PVC und PP, PVC und PA, PVC und PC, PVC und PET, PE und PP, PE und PA, PE und PC, PE und PET, PP und PA, PP und PC, PP und PET, PA und PC, PA und PET oder PC und PET.

Auch zwei Polymere der gleichen Strukturformel aber unterschiedlicher charakteristischer Verteilung der Molekülkettenlänge sind insbesondere geeignet als erstes Polymer 9 und zweites Polymer 10. Ebenfalls geeignet sind Polymerzusammensetzungen aus den vorgenannten Polymeren als erstes Polymer 9 und/oder zweites Polymer 10.

Schließlich kann, wie in Bezug auf die vorhergehenden Figuren erläutert, auch eine Herstellung des Faservlieses 1 mit nur einem einzigen Polymer und/oder nur einer einzigen charakteristischen Molekühlkettenlänge aus dieser Gruppe erfolgen.

Es ist auch möglich, die anhand der Figuren 7 und 8 vorgestellten Herstellungsverfahren zu kombinieren. Weiterhin vorzugsweise kann eine Bildung der verschiedenen Abschnitte 3, 4 und 6 eines Faserstrangs 2 durch die Veränderung des Polymerdurchsatzes durch die Düsen des Spinnbalkens 12, beispielsweise über eine Veränderung des Aussprühdrucks in dem Spinnbalken 12 erfolgen. Auch diese Technik ist mit den vorherigen Techniken kombinierbar.

Eine auf diese Weise erzeugte erste Lage 12 eines Faservlieses 5 weist vorzugsweise eine Massenbelegung von etwa 25 g/m² bis 45 g/m², bevorzugt von etwa 30 g/m² bis 40 g/m² und am bevorzugtesten von etwa 35 g/m² und weiter vorzugsweise eine Dicke von etwa 0,4 mm bis etwa 0,7 mm, bevorzugt etwa 0,5 mm bis etwa 0,6 mm und am bevorzugtesten von etwa 0,55 mm auf. Ferner weist diese erste Lage 12 vorzugsweise im Durchschnitt etwa 2 bis 10 Verdickungen/cm², bevorzugt etwa 4 bis 8 Verdickungen/cm², besonders bevorzugt etwa 5 bis 7 Verdickungen/cm² und am bevorzugtesten etwa 6 Verdickungen/cm² auf. Die Luftdurchlässigkeit dieser ersten Lage 12 beträgt vorzugsweise etwa 5000 l/(m²s) bis 7000 l/(m²s), bevorzugt etwa 5500 l/(m²s) bis 6500 l/(m²s) und am bevorzugtesten etwa 6000 l/(m²s). Die Abscheideleistung beträgt vorzugsweise etwa 10 % bis 20 % und bevorzugt etwa 15 %. Auch in Randbereichen der jeweiligen Bereichsangaben kann die erfindungsgemäße Wirkung erreicht werden. Darüber hinaus sind alle genannten Parameterwerte Durchschnittswerte, welche an einzelnen Stellen der ersten Lage 12 signifikant abweichen können.

Die erste Lage 12 weist vorzugsweise eine durchschnittliche Porengröße nach dem Bubble-Point Test von mehr als 80 µm bis 100 µm. Der erste Faserabschnitt 3 und/oder der dritte Faserabschnitt 6 weisen weiter vorzugsweise eine durchschnittliche Dicke von 10 µm bis 40 µm, bevorzugt von 20 µm bis 30 µm und am bevorzugtesten von 25 µm auf. Der zweite Faserabschnitt 4 weist im Bereich einer Verdickung 5 weiter vorzugsweise eine durchschnittliche Dicke von 100 µm bis 1000 µm, bevorzugt von 200 µm bis 900 µm, bevorzugt von 300 µm bis 800 µm, noch bevorzugter von 400 µm bis 700 µm und am bevorzugtesten von 500 µm auf.

Es wurde überraschend festgestellt, dass durch ein Faservliese 1 mit Verdickungen 5, welche in einem Faservlies 1 angeordnet sind, die Steifigkeit des Faservlieses 1 erhöht wird. Dies liegt insbesondere an der Tatsache, dass die Verdickungen 5 bei der Herstellung des Faservlieses 1 in den zweiten Faserabschnitten langsamer abkühlen als der Faserstrang 2 in dem ersten Faserabschnitt 3 und dem dritten Faserabschnitten 6. Insbesondere die Akkumulation von Polymer in den zweiten Faserabschnitten 4 des Faserstrangs 1 führt hierbei zu der langsameren Abkühlung.

Zum einen bildet der abgekühlte Verdickungen 5 eine Verstärkung in dem Faservlies 1, zum anderen werden auch weitere Teile des Faserstrangs 2 bzw. anderer Faserstränge 2 zumindest teilweise mit der Verdickung 5 verschmolzen, so dass eine Verdickung 5 in seiner gesamten Umgebung zu einer Versteifung des Materials führt. Gleichzeitig bleibt die Verdickung 5 aber Teil des Faserstrangs 2 mit ähnlicher Oberflächenstruktur und kann daher zu filternde Partikel absorbieren.

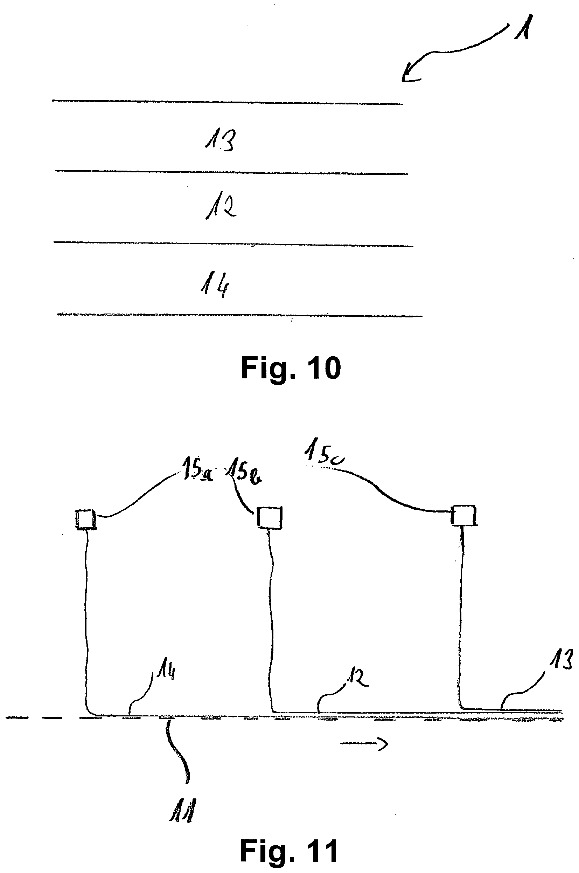

Figur 10 zeigt ein erfindungsgemäßes Faservlies 1 gemäß einer weiteren Ausführungsform der Erfindung. In dieser weist das Faservlies 1 drei Lagen 12, 13, 14 auf. Diese drei Lagen 12, 13, 14 werden vorzugsweise in einem gemeinsamen Urformprozess gemäß der Figur 11 hergestellt. Dabei sind vorzugsweise drei Spinnbalken 15a, 15b, 15c hintereinander über einem Substrat 11 angeordnet, welche gleichzeitig Faserstränge 2 auf dem Substrat 11, vorzugsweise mittels eines Meltblown- oder Spün-Bond-Verfahrens, ablegen, welches sich in der Figur 11 nach rechts bewegt. Von dem linken Spinnbalken 15a wird eine zweite Lage 13 hergestellt, von dem mittleren Spinnbalken 15b eine erste Lage 12 wie im Vorhergehenden beschrieben und von dem von dem rechten Spinnbalken 15c eine dritte Lage 14. Die Reihenfolge der Ablage der drei Lagen 12, 13, 14 ist dabei nicht auf diese beschriebene Ausführungsform beschränkt, sondern kann entsprechend in jeder beliebigen Reihenfolge erfolgen. Vorzugsweise kann das erfindungsgemäße Faservlies auch nur zwei Lagen, die erste Lage 12 und die zweite Lage 13 oder die erste Lage 13 und die dritte Lage 14 aufweisen, wobei jede der jeweils beiden Lagen beim Herstellungsverfahren als erstes abgelegt werden kann. Weiter vorzugsweise kann die Herstellung auch mit einem einzigen Spinnbalken erfolgen, dessen Düsen jeweils verschiedene Polymere extrudieren können.

Die zweite Lage 13 und die dritte Lage 14 können dabei nach demselben Verfahren wie die erste Lage 12 hergestellt werden, vorzugsweise werden aber andere Verfahren angewandt, um Lagen mit anderen Eigenschaften zu erzeugen. Vorzugsweise ist die zweite Lage 13 ein relativ grobes Faservlies 1 zur weiteren Stabilisierung des Faservlieses 1 und/oder um grobe Partikel vorfiltern zu können. Die dritte Lage 14 ist vorzugsweise ein Elektretfilter, welcher die Staubspeicherkapazität sowie die Abscheideleistung durch elektrostatische Bindung von Partikeln erhöht.

Die zweite Lage 13 weist vorzugsweise eine Massenbelegung von etwa 45 bis 75 g/m², bevorzugt von etwa 50 bis 70 g/m², besonders bevorzugt von etwa 55 bis 65 g/m² und am bevorzugtesten von etwa 60 g/m² und weiter vorzugsweise eine Dicke von etwa 0,5 mm bis 0,9 mm, bevorzugt von etwa 0,6 mm bis 0,8 mm und am bevorzugtesten von etwa 0,7 mm auf. Des Weiteren weist die zweite Lage 13 eine Luftdurchlässigkeit von etwa 3000 l/m²s bis 4000 l/m²s, bevorzugt etwa 3250 l/m²s bis 3750 l/m²s und am bevorzugtesten von etwa 3500 l/m²s und weiter vorzugsweise eine Abscheideleistung von etwa 10% bis 25%, bevorzugt von etwa 15% bis 20% und am bevorzugtesten von etwa 17,5% auf. Die zweite Lage 13 weist weiter vorzugsweise eine durchschnittliche Porengröße nach dem Bubble-Point Test von mehr als 65 µm bis 120 µm, bevorzugt von 70 µm bis 90 µm und am bevorzugtesten von 80 µm auf.

Die dritte Lage 14 weist vorzugsweise eine Massenbelegung von etwa 35 bis 60 g/m², bevorzugt von etwa 40 bis 55 g/m², besonders bevorzugt etwa von 45 bis 50 g/m² und am bevorzugtesten von etwa 47,5 g/m² und vorzugsweise eine Dicke etwa von 0,4 mm bis 0,7 mm, bevorzugt etwa von 0,5 mm bis 0,6 mm und am bevorzugtesten von etwa 0,55 mm auf. Des Weiteren weist die dritte Lage 14 vorzugsweise eine Luftdurchlässigkeit etwa von 800 l/(m²s) bis 1300 l/(m²s), bevorzugt etwa von 900 l/(m²s) bis 1200 l/(m²s) und am bevorzugtesten von etwa 1000 l/(m²s) und/oder eine Abscheideleistung etwa von 40% bis 80%, bevorzugt etwa von 50% bis 70% und am bevorzugtesten von etwa 60% auf. Die dritte Lage 14 weist weiter vorzugsweise eine durchschnittliche Porengröße nach dem Bubble-Point Test von mehr als 10 µm bis 60 µm, bevorzugt von 20 µm bis 50 µm, bevorzugter von 30 bis 40 µm und am bevorzugtesten von 35 µm auf.

Zusammen weisen die drei Lagen 12, 13, 14 vorzugsweise eine Massenbelegung etwa von 105 g/m² bis 180 g/m², bevorzugt etwa von 120 g/m² bis 160 g/m² und am bevorzugtesten von etwa 140 g/m² und weiter vorzugsweise eine Dicke etwa von 1,2 mm bis 2,5 mm, bevorzugt etwa von 1,3 mm bis 2,3 mm, besonders bevorzugt etwa von 1,5 mm bis 2,1 mm, bevorzugter etwa von 1,7 mm bis 1,9 mm und am bevorzugtesten von etwa 1,8 mm auf. Die gemeinsame Luftdurchlässigkeit beträgt etwa 500 l/(m²s) bis 1300 l/(m²s), bevorzugt etwa 600 l/(m²s) bis 1200 l/(m²s), besonders bevorzugt etwa 800 l/(m²s) bis 1000 l/(m²s) und am bevorzugtesten etwa 900 l/(m²s).

Der mittlere Porendurchmesser der drei Lagen beträgt vorzugsweise 15 µm bis 25 µm.

Auch in Randbereichen der jeweiligen Bereichsangaben kann die erfindungsgemäße Wirkung erreicht werden. Darüber hinaus sind alle genannten Parameterwerte Durchschnittswerte, welche an einzelnen Stellen der jeweiligen Lagen signifikant abweichen können.

## Patentansprüche

1. Faservlies (1), insbesondere für ein Filtermedium, mit einer ersten Lage (12),
wobei zumindest ein einstückiger Faserstrang (2) der ersten Lage (12) in Längsrichtung zumindest einen ersten Faserabschnitt (3) und zumindest einen zweiten Faserabschnitt (4) aufweist,
**dadurch gekennzeichnet,**
**dass** der Faserstrang (2) im Wesentlichen in dem zweiten Faserabschnitt (4) eine Verdickung (5) aufweist,
wobei der erste Faserabschnitt (3) eine ersten Polymermischung, insbesondere im Wesentlichen aus einem ersten Polymer (9), aufweist und der zweite Faserabschnitt (4) eine zweiten Polymermischung, insbesondere im Wesentlichen aus einem zweiten Polymer (10), aufweist, wobei die zweite Polymermischung, insbesondere das zweite Polymer (10), eine höhere Viskosität aufweist als die erste Polymermischung, insbesondere das erste Polymer (9).

2. Faservlies (1) nach Anspruch 1, wobei eine Verdickung an ihrer breitesten Stelle einen Durchmesser aufweist, welcher zu dem mittleren Durchmesser des Faserstrangs in dem zumindest einen ersten Faserabschnitt (3) ein Verhältnis von zumindest 1,5:1, bevorzugt von zumindest 1,7:1, bevorzugter von zumindest 2:1, und am bevorzugtesten von zumindest 3:1 aufweist.

3. Faservlies (1) nach Anspruch 1 oder 2, wobei der Faserstrang im ersten Faserabschnitt einen mittleren Durchmesser von etwa 0,5 bis 20 µm, bevorzugt von etwa 1 bis 9 µm, bevorzugter von etwa 3 bis 6 µm und am bevorzugtesten von etwa 5 µm aufweist.

4. Faservlies (1) nach einem der Ansprüche 1 bis 3, wobei die Verdickung an ihrer breitesten Stelle einen Durchmesser aufweist, welcher zu der Ausdehnung der Verdickung in Längsrichtung des zumindest einen einstückigen Faserstrangs ein Verhältnis von etwa 0,5:1 bis 1:1, bevorzugter von etwa 1:1 bis 2:1 und am bevorzugtesten von etwa 2:1 bis 4:1 aufweist.

5. Faservlies (1) nach einem der Ansprüche 1 bis 4, wobei die Verdickung (5) eine Kräuselung und/oder ein Faserbündel (7) aufweist.

6. Faservlies (1) nach einem der Ansprüche 1 bis 5, wobei die Verdickung (5) verschlungenen Schlaufen des Faserstrangs aufweist.

7. Faservlies (1) nach einem der vorhergehenden Ansprüche, wobei die Verdickung (5) einen Bereich (8) aufweist, in welchem der Faserstrang (2) an sich selbst anliegt und bevorzugt in diesem Bereich (8) zumindest teilweise verschmolzen ist.

8. Faservlies (1) nach einem der vorhergehenden Ansprüche, wobei der Anteil des zweiten Polymers (10) in dem Faservlies (1) 2 Gew.-% bis 20 Gew.-%, bevorzugt 5 Gew.-% bis 15 Gew.-% und am bevorzugtesten 10 Gew.-% beträgt.

9. Faservlies (1) nach einem der vorhergehenden Ansprüche, wobei sich der zweite Faserabschnitt (4) an den ersten Faserabschnitt (3) anschließt und der einstückige Faserstrang (2) einen dritten Faserabschnitt (6) aufweist, der sich dem zweiten Faserabschnitt (4) anschließt und dessen Struktur im Wesentlichen identisch zum ersten Faserabschnitt (3) ist.

10. Faservlies (1) nach einem der vorhergehenden Ansprüche, wobei die erste Lage (12) im Durchschnitt etwa 2 bis 10 Verdickungen/cm², bevorzugt etwa 4 bis 8 Verdickungen/cm², besonders bevorzugt etwa 5 bis 7 Verdickungen/cm² und am bevorzugtesten etwa 6 Verdickungen/cm² aufweist.

11. Faservlies (1) nach einem der vorhergehenden Ansprüche, welches zusätzlich eine zweite Lage (13) aufweist, deren Porengröße im Durchschnitt kleiner als jene der ersten Lage ist.

12. Faservlies (1) nach Anspruch 11, welches zusätzlich eine dritte Lage (14) aufweist, deren Porengröße im Durchschnitt kleiner als jene der zweiten Lage ist und welche vorzugsweise an der der zweiten Lage abgewandten Seite der ersten Lage angeordnet ist.

13. Filter mit einem Faservlies (1) gemäß einem der Ansprüche 1 bis 12 als Filtermedium, wobei das Faservlies (1) vorzugsweise plissiert ist.

14. Verfahren zur Herstellung eines Faservlieses (1), folgende Arbeitsschritte aufweisend:
Bereitstellen (17) einer ersten Polymerschmelze (9, 10) aus einer ersten Polymermischung, insbesondere einem ersten Polymer (9), und einer zweiten Polymermischung, insbesondere einem zweiten Polymer (10), wobei die zweite Polymermischung, insbesondere das zweite Polymer (10), eine höhere Viskosität aufweist als die erste Polymermischung, insbesondere das erste Polymer (9);
Herstellen (18) einer ersten Lage (11) aus der ersten Polymerschmelze (9, 10), insbesondere im Meltblown- oder im Spunbondverfahren;
Veränderung (19), insbesondere intervallmäßig oder oszillierend, zumindest der Zusammensetzung der Polymerschmelze (9, 10) zur Erzeugung von zwei in Längsrichtung des Faserstrangs angeordneten Faserabschnitten (3, 4) mit unterschiedlichen Strukturen eines einstückigen Faserstrangs (2), wobei ein erster Faserabschnitt (3) die erste Polymermischung, insbesondere im Wesentichen das erste Polymer (9) und ein zweiter Faserabschnitt (4) die zweite Polymermischung, insbesondere im Wesentlichen das zweite Polymer (10), aufweist und der Faserstrang (2) im Wesentlichen im zweiten Faserabschnitt (4) eine Verdickung (5) aufweist; und
Ablegen (20) des Faserstrangs (2) auf einem Substrat (11).

15. Verfahren nach Anspruch 14, welches des Weiteren die folgenden Arbeitsschritte aufweist:
Bereitstellen (21) einer zweiten Polymerschmelze und/oder einer dritten Polymerschmelze;
Herstellen (22) einer zweiten Lage (13) aus der zweiten Polymerschmelze und/oder dritten Lage (14) aus der dritten Polymerschmelze, wobei die erste Lage (12) und die zweite Lage (13) und/oder die dritte Lage (14) in einem einzigen Urformprozess, insbesondere im Meltblown- oder im Spunbond-Verfahren, gleichzeitig hergestellt werden.

## Claims

1. A nonwoven fibre fabric (1), in particular for a filter medium, comprising a first layer (12),
wherein at least one one-piece fibre strand (2) of the first layer (12) comprises, in the longitudinal direction, at least a first fibre portion (3) and at least a second fibre portion (4),
**characterized in that**
the fibre strand (2) comprises a wider portion (5) substantially in the second fibre portion (4),
wherein the first fibre portion (3) comprises a first polymer mixture, in particular consisting substantially of a first polymer (9), and the second fibre portion (4) comprises a second polymer mixture, in particular consisting substantially of a second polymer (10), wherein the second polymer mixture, in particular the second polymer (10), has a higher viscosity than the first polymer mixture, in particular the first polymer (9).

2. The nonwoven fibre fabric (1) according to claim 1, wherein a wider portion, at its widest point, has a diameter which has a ratio of at least 1.5 : 1, preferably of at least 1.7 : 1, more preferably of at least 2 : 1, and most preferably of at least 3 : 1, to the average diameter of the fibre strand in the at least one first fibre portion (3).

3. The nonwoven fibre fabric (1) according to claim 1 or 2, wherein the fibre strand in the first fibre portion has an average diameter of from about 0.5 to 20 µm, preferably from about 1 to 9 µm, more preferably from about 3 to 6 µm and most preferably of about 5 µm.

4. The nonwoven fibre fabric (1) according to any one of the claims 1 to 3, wherein the wider portion, at the position where it is widest, has a diameter which has a ratio of from about 0.5 : 1 to 1 : 1, more preferably from about 1 : 1 to 2 : 1, and most preferably from about 2 : 1 to 4 : 1 to the extent of the wider portion in the longitudinal direction of the at least one one-piece fibre strand.

5. The nonwoven fibre fabric (1) according to any one of the claims 1 to 4, wherein the wider portion (5) comprises a crimp and / or a bundle of fibres (7).

6. The nonwoven fibre fabric (1) according to any one of the claims 1 to 5, wherein the wider portion (5) comprises entangled loops of the fibre strand.

7. The nonwoven fibre fabric (1) according to any one of the preceding claims, wherein the wider portion (5) comprises a region (8) in which the fibre strand (2) touches itself and preferably is at least partially fused in said region (8).

8. The nonwoven fibre fabric (1) according to any one of the preceding claims, wherein the proportion of the second polymer (10) in the nonwoven fibre fabric (1) is from 2 wt. % to 20 wt. %, preferably from 5 wt. % to 15 wt. % and most preferably 10 wt. %.

9. The nonwoven fibre fabric (1) according to any one of the preceding claims, wherein the second fibre portion (4) joins onto the first fibre portion (3), and the one-piece fibre strand (2) comprises a third fibre portion (6) which joins onto the second fibre portion (4) and the structure of which is substantially identical to the first fibre portion (3).

10. The nonwoven fibre fabric (1) according to any one of the preceding claims, wherein the first layer (12) comprises an average of about 2 to 10 wider portions per cm², preferably about 4 to 8 wider portions per cm², particularly preferably about 5 to 7 wider portions per cm² and most preferably about 6 wider portions per cm².

11. The nonwoven fibre fabric (1) according to any one of the preceding claims, which additionally comprises a second layer (13), the pore size of which is, on average, smaller than that of the first layer.

12. The nonwoven fibre fabric (1) according to claim 11, which additionally comprises a third layer (14), the pore size of which is, on average, smaller than that of the second layer and which is preferably arranged on the side of the first layer which faces away from the second layer.

13. A filter comprising a nonwoven fibre fabric (1) according to any one of the claims 1 to 12 as a filter medium, wherein the nonwoven fibre fabric (1) is preferably pleated.

14. A method of producing a nonwoven fibre fabric (1), comprising the following process steps:
providing (17) a first polymer melt (9, 10) of a first polymer mixture, in particular a first polymer (9), and a second polymer mixture, in particular a second polymer (10), wherein the second polymer mixture, in particular the second polymer (10), has a higher viscosity than the first polymer mixture, in particular the first polymer (9);
producing (18) a first layer (11) from the first polymer melt (9, 10), in particular by means of a melt blowing or a spunbonding process;
changing (19) at least the composition of the polymer melt (9, 10), in particular at intervals or in an oscillating manner, in order to produce two fibre portions (3, 4) of a one-piece fibre strand (2) which are arranged in the longitudinal direction of the fibre strand and which have different structures, wherein a first fibre portion (3) comprises the first polymer mixture, in particular substantially the first polymer (9), and a second fibre portion (4) comprises the second polymer mixture, in particular substantially the second polymer (10), and the fibre strand (2) comprises a wider portion (5) substantially in the second fibre portion (4); and
depositing (20) the fibre strand (2) on a substrate (11).

15. The method according to claim 14, which further comprises the following process steps:
providing (21) a second polymer melt and / or a third polymer melt;
producing (22) a second layer (13) from the second polymer melt and / or a third layer (14) from the third polymer melt, wherein the first layer (12) and the second layer (13) and / or the third layer (14) are produced simultaneously in a single primary forming process, in particular by means of the melt blowing or spunbonding process.

## Revendications

1. Non-tissé de fibres (1), en particulier pour un milieu filtrant, avec une première couche (12), dans lequel au moins un écheveau de fibres (2) d'un seul tenant de la première couche (12) présente dans le sens longitudinal au moins une première section de fibres (3) et au moins une deuxième section de fibres (4),
**caractérisé en ce**
**que** l'écheveau de fibres (2) présente sensiblement dans la deuxième section de fibres (4) un épaississement (5),
dans lequel la première section de fibres (3) présente un premier mélange de polymères, en particulier sensiblement composé d'un premier polymère (9), et la deuxième section de fibres (4) présente un deuxième mélange de polymères, en particulier sensiblement composé d'un deuxième polymère (10), dans lequel le deuxième mélange de polymères, en particulier le deuxième polymère (10), présente une viscosité plus élevée que le premier mélange de polymères, en particulier le premier polymère (9).

2. Non-tissé de fibres (1) selon la revendication 1, dans lequel un épaississement présente, au niveau de son emplacement le plus large, un diamètre, qui présente, par rapport au diamètre moyen de l'écheveau de fibres dans l'au moins une première section de fibres (3), un rapport d'au moins 1,5:1, de manière préférée d'au moins 1,7:1, de manière plus préférée d'au moins 2:1, et idéalement d'au moins 3:1.

3. Non-tissé de fibres (1) selon la revendication 1 ou 2, dans lequel l'écheveau de fibres dans la première section de fibres présente un diamètre moyen d'environ 0,5 à 20 µm, de manière préférée d'environ 1 à 9 µm, de manière plus préférée d'environ 3 à 6 µm et idéalement d'environ 5 µm.

4. Non-tissé de fibres (1) selon l'une quelconque des revendications 1 à 3, dans lequel l'épaississement présente au niveau de son emplacement le plus large un diamètre, qui présente par rapport à l'extension de l'épaississement dans le sens longitudinal de l'au moins un écheveau de fibres d'un seul tenant un rapport d'environ 0,5:1 à 1:1, de manière préférée d'environ 1:1 à 2:1 et idéalement d'environ 2:1 à 4:1.

5. Non-tissé de fibres (1) selon l'une quelconque des revendications 1 à 4, dans lequel l'épaississement (5) présente un frisage et/ou un faisceau de fibres (7).

6. Non-tissé de fibres (1) selon l'une quelconque des revendications 1 à 5, dans lequel l'épaississement (5) présente des boucles entrelacées de l'écheveau de fibres.

7. Non-tissé de fibres (1) selon l'une quelconque des revendications précédentes, dans lequel l'épaississement (5) présente une zone (8), dans laquelle l'écheveau de fibres (2) repose sur lui-même et est fondu au moins en partie de manière préférée dans ladite zone (8).

8. Non-tissé de fibres (1) selon l'une quelconque des revendications précédentes, dans lequel la fraction du deuxième polymère (10) dans le non-tissé de fibres (1) est de 2 % en poids à 20 % en poids, de manière préférée de 5 % en poids à 15 % en poids, et idéalement de 10 % en poids.

9. Non-tissé de fibres (1) selon l'une quelconque des revendications précédentes, dans lequel la deuxième section de fibres (4) se situe dans le prolongement de la première section de fibres (3), et l'écheveau de fibres (2) d'un seul tenant présente une troisième section de fibres (6), qui se situe dans le prolongement de la deuxième section de fibres (4) et dont la structure est sensiblement identique à la première section de fibres (3) .

10. Non-tissé de fibres (1) selon l'une quelconque des revendications précédentes, dans lequel la première couche (12) présente en moyenne environ 2 à 10 épaississements/cm², de manière préférée environ de 4 à 8 épaississements/cm², de manière particulièrement préférée environ de 5 à 7 épaississements/cm² et idéalement environ 6 épaississements/cm².

11. Non-tissé de fibres (1) selon l'une quelconque des revendications précédentes, lequel présente en supplément une deuxième couche (13), dont la taille de pores est en moyenne inférieure à celle de la première couche.

12. Non-tissé de fibres (1) selon la revendication 11, lequel présente en supplément une troisième couche (14), dont la taille de pores est en moyenne inférieure à celle de la deuxième couche et laquelle est disposée de préférence au niveau du côté, opposé à la deuxième couche, de la première couche.

13. Filtre avec un non-tissé de fibres (1) selon l'une quelconque des revendications 1 à 12 en tant que milieu filtrant, dans lequel le non-tissé de fibres (1) est de préférence plissé.

14. Procédé servant à fabriquer un non-tissé de fibres (1), présentant des étapes de travail qui suivent :
de fourniture (17) d'une première matière fondue polymère (9, 10) composée d'un premier mélange de polymères, en particulier d'un premier polymère (9), et d'un deuxième mélange de polymères, en particulier d'un deuxième polymère (10), dans lequel le deuxième mélange de polymères, en particulier le deuxième polymère (10), présente une viscosité plus élevée que le premier mélange de polymères, en particulier le premier polymère (9) ;
de fabrication (18) d'une première couche (11) à partir de la première matière fondue polymère (9, 10), en particulier dans le procédé de fusion-soufflage ou dans le procédé de filé-lié ;
de modification (19), en particulier conformément à des intervalles ou par oscillations, au moins de la composition de la matière fondue polymère (9, 10) pour générer deux sections de fibres (3, 4) disposées dans le sens longitudinal de l'écheveau de fibres avec des structures différentes d'un écheveau de fibres (2) d'un seul tenant,
dans lequel une première section de fibres (3) présente le premier mélange de polymères, en particulier sensiblement le premier polymère (9), et une deuxième section de fibres (4) présente le deuxième mélange de polymères, en particulier sensiblement le deuxième polymère (10), et l'écheveau de fibres (2) présente sensiblement dans la deuxième section de fibres (4) un épaississement (5) ; et
de dépôt (20) de l'écheveau de fibres (2) sur un substrat (11) .

15. Procédé selon la revendication 14, lequel présente par ailleurs les étapes de travail suivantes :
de fourniture (21) d'une deuxième matière fondue polymère et/ou d'une troisième matière fondue polymère ;
de fabrication (22) d'une deuxième couche (13) à partir de la deuxième matière fondue polymère et/ou de la troisième couche (14) à partir de la troisième matière fondue polymère, dans lequel la première couche (12) et la deuxième couche (13) et/ou la troisième couche (14) sont fabriquées de manière simultanée lors d'un processus de façonnage unique, en particulier lors du procédé de fusion-soufflage ou lors du procédé de filé-lié.
